(19) Europäisches Patentamt
European Patent Office
Office européen des brevets

(11) **EP 4 765 015 A1**

(12) **EUROPEAN PATENT APPLICATION**
published in accordance with Art. 153(4) EPC

(43) Date of publication:
**24.06.2026 Bulletin 2026/26**

(21) Application number: **24864664.8**

(22) Date of filing: **11.09.2024**

(51) International Patent Classification (IPC):
***G06T 5/70*** *(2024.01)*

(52) Cooperative Patent Classification (CPC):
**G06T 5/70**

(86) International application number:
**PCT/CN2024/118314**

(87) International publication number:
**WO 2025/055950 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.09.2023 CN 202311192131**

(71) Applicant: HUAWEI TECHNOLOGIES CO., LTD.
Shenzhen, Guangdong 518129 (CN)

(72) Inventors:
• LIU, Zewen
 Shenzhen, Guangdong 518129 (CN)
• ZHANG, Jian
 Shenzhen, Guangdong 518129 (CN)
• ZHONG, Zhao
 Shenzhen, Guangdong 518129 (CN)

(74) Representative: **Körber, Martin Hans
Mitscherlich PartmbB
Karlstraße 7
80333 München (DE)**

(54) **CONTENT GENERATION METHOD AND APPARATUS, AND COMPUTING DEVICE CLUSTER**

(57)     A content generation method is disclosed, and includes: processing, via a diffusion model in response to obtained first data input by a user, an initial signal obtained through random sampling, to obtain a first predicted noise signal (S201); performing denoising on the first predicted noise signal through an iteration of the diffusion model, to obtain first content related to the first data (S202); and performing noise adding and denoising on the first content through an iteration of the diffusion model, to obtain second content related to the first data (S203). In this way, in a two-stage content generation manner, a content structure can be quickly constructed in a first stage by using a smaller quantity of inference times, and content details can be highlighted in a second stage. Therefore, high-quality content can be generated more efficiently, and the structure and the details are rich and real.

FIG. 2

# EP 4 765 015 A1

## Description

This application claims priority to Chinese Patent Application No. 202311192131.X, filed with the China National Intellectual Property Administration on September 14, 2023 and entitled "CONTENT GENERATION METHOD AND APPARATUS, AND COMPUTING DEVICE CLUSTER", which is incorporated herein by reference in its entirety.

## TECHNICAL FIELD

This application relates to the field of artificial intelligence (artificial intelligence, AI) technologies, and in particular, to a content generation method and apparatus, and a computing device cluster.

## BACKGROUND

A diffusion model (diffusion model, DM) is a generative model. Multi-step iterative denoising is performed on an initial signal obtained through random sampling, to find a corresponding meaningful location of the denoised initial signal in an image probability distribution. The location defines image information, and this denoising process is an image generation process. In addition to an image task, the diffusion model has also been used in generation tasks of other content forms such as an audio, a video, and text.

Training of the diffusion model may usually be divided into a forward process and a reverse process. The forward process is mainly noise adding, and the reverse process is mainly denoising. In a training stage of the diffusion model, noise is added to a sample such as an image to obtain a data pair of a noisy sample and the noise; the noisy data is input into a neural network in the reverse process to predict the added noise signal; and a distance between the predicted noise and the real noise is reduced by using a supervised learning method, to train a noise prediction capability of the diffusion model. The diffusion model can predict the noise in the sample, and therefore can denoise the noisy sample. In an inference stage of the diffusion model, a randomly sampled initial signal is gradually denoised through multiple iterations of the diffusion model, to generate required data, for example, an image, an audio, or a video.

Due to an iterative generation manner of the diffusion model, the diffusion model can generate higher-quality content beyond generative methods such as a variational autoencoder (variational autoencoder, VAE) and a generative adversarial network (generative adversarial network, GAN). However, the iterative generation manner of the diffusion model results in higher time and computing overheads in an inference process of the diffusion model. Therefore, how to increase an inference speed of the diffusion model is an urgent technical problem to be resolved currently.

## SUMMARY

This application provides a content generation method and apparatus, a computing device cluster, a computer storage medium, and a computer product, to increase an inference speed of a diffusion model.

According to a first aspect, this application provides a content generation method, including: processing, via a diffusion model in response to obtained first data input by a user, an initial signal obtained through random sampling, to obtain a first predicted noise signal; performing denoising on the first predicted noise signal through an iteration of the diffusion model, to obtain first content related to the first data; and performing noise adding and denoising on the first content through an iteration of the diffusion model, to obtain second content related to the first data. For example, the method may be applied to a device side, for example, an electronic device such as a computer, or may be applied to a cloud side, for example, a cloud server. When the method is applied to the device side, the device side may present the second content to the user after obtaining the second content. When the method is applied to the cloud side, the device side may obtain the first data, and then transmit the first data to the cloud side. In this way, the cloud side may obtain the first data. The cloud side may transmit the second content to the device side after obtaining the second content, to present the second content to the user on the device side.

In this way, in a two-stage content generation manner, a content structure (for example, an image structure) can be quickly constructed in a first stage (that is, a process of obtaining the first content through the iteration) by using a smaller quantity of inference times, and content details can be highlighted in a second stage (that is, a process of obtaining the second content through the iteration). Therefore, high-quality content can be generated more efficiently, and the structure and the details are rich and real. Because local details can be enhanced in the second stage, only the content structure needs to be constructed in the first stage, and the local details do not need to be constructed. Therefore, a quantity of iterations in the first stage can be reduced, and a reduced quantity of iterations may be less than a quantity of iterations in the second stage, so that a total quantity of iterations is reduced. In this way, content generation efficiency can be improved while quality of generated content is ensured. In addition, the quality of the generated content can be improved while the total quantity of iterations remains unchanged.

In a possible implementation, performing denoising on the first predicted noise signal through the iteration includes: determining, in a process of a current round of iteration, a truncation error in the iteration process based on a predicted noise signal generated through k (k≥1) rounds of iterations before the current round, where the truncation error represents a deviation between an ideal denoising result and an actual denoising result; and updating, based on the truncation error, a second predicted noise signal obtained through the current round of iteration. In this way, the deviation between the ideal denoising result and the actual denoising result may be estimated based on a historical predicted noise signal, so that a result obtained through the current round of iteration can be corrected based on the deviation, to improve accuracy of the denoising result.

In a possible implementation, before updating, based on the truncation error, the second predicted noise signal obtained through the current round of iteration, further includes: performing over-correction on the truncation error. In this way, the result generated through the iteration can be prevented from being oversmoothed through over-correction, and a local primary texture can be retained, so that more adjustment space is available in the second stage, and content generation quality is improved.

In a possible implementation, in a process of performing noise adding and denoising on the first content through the iteration, an amount of added noise is greater than an amount of removed noise. Because the result has converged to a location near a target location (that is, an optimal denoising result) in the first stage, more noise may be added in the second stage, so that the result generated in the first stage oscillates near the target location. In an oscillation process, a distance from a noise point (namely, the noise point) to the target location is generally less than a distance between two noise points. Therefore, a small coefficient is used during denoising, to remove a small amount of noise. In this way, more noise can be added and less noise can be removed, to improve content generation quality.

In a possible implementation, before performing denoising on the first predicted noise signal through the iteration of the diffusion model, the method further includes: selecting a subsequence of a first length from an inference sequence of the diffusion model, where the subsequence represents a quantity of times for denoising the first predicted noise signal and a degree of denoising each time. In this way, inference steps of the diffusion model are reduced, and an inference speed is increased.

In a possible implementation, a quantity of iterations for obtaining the first content is greater than a quantity of iterations for obtaining the second content. Because the result has converged from a random location to the location near the target location in the first stage, the second stage has a small quantity of iterations, to facilitate quick fine-tuning in the second stage. In this way, the inference speed can be increased and resource overheads can be reduced while the quality of the generated content is ensured.

In a possible implementation, the method is applied to a server (for example, a cloud server). In this case, before processing, via the diffusion model, the initial signal obtained through random sampling, the method further includes: obtaining the first data sent by an electronic device; and after obtaining the second content related to the first data, the method further includes: sending the second content to the electronic device. In this way, when computing power of the electronic device is insufficient, required content can be obtained through device-cloud collaboration.

According to a second aspect, this application provides a content generation apparatus, including a first processing module and a second processing module. The first processing module is configured to process, via a diffusion model in response to obtained first data input by a user, an initial signal obtained through random sampling, to obtain a first predicted noise signal. The second processing module is configured to: perform denoising on the first predicted noise signal through an iteration of the diffusion model, to obtain first content related to the first data; and perform noise adding and denoising on the first content through an iteration of the diffusion model, to obtain second content related to the first data.

In a possible implementation, when performing denoising on the first predicted noise signal through the iteration, the second processing module is specifically configured to: determine, in a process of a current round of iteration, a truncation error in the iteration process based on a predicted noise signal generated through k (k≥1) rounds of iterations before the current round, where the truncation error represents a deviation between an ideal denoising result and an actual denoising result; and update, based on the truncation error, a second predicted noise signal obtained through the current round of iteration.

In a possible implementation, before updating, based on the truncation error, the second predicted noise signal obtained through the current round of iteration, the second processing module is further configured to perform over-correction on the truncation error.

In a possible implementation, in a process of performing noise adding and denoising on the first content through the iteration, an amount of added noise is greater than an amount of removed noise.

In a possible implementation, before performing denoising on the first predicted noise signal through the iteration of the diffusion model, the second processing module is further configured to select a subsequence of a first length from an inference sequence of the diffusion model, where the subsequence represents a quantity of times for denoising the first predicted noise signal and a degree of denoising each time.

In a possible implementation, a quantity of iterations for obtaining the first content is greater than a quantity of iterations for obtaining the second content.

In a possible implementation, the content generation apparatus may be disposed on a server. In this case, the content generation apparatus may further include a communication module. The communication module is configured to: before the first processing module processes, via the diffusion model, the initial signal obtained through random sampling, obtain the first data sent by an electronic device; and after the second processing module obtains the second content related to the first data, send the second content to the electronic device.

According to a third aspect, this application provides a content generation apparatus, including a processor and a memory. The memory is configured to store computer instructions, and when the computer instructions are executed by the processor, the content generation apparatus is enabled to perform the method provided in the first aspect. For example, the content generation apparatus may be but is not limited to a chip.

According to a fourth aspect, this application provides a computing device cluster, including at least one computing device, where each computing device includes a processor and a memory, and the processor of the at least one computing device is configured to execute instructions stored in the memory of the at least one computing device, to enable the computing device cluster to perform the method described in any one of the first aspect or the possible implementations of the first aspect.

According to a fifth aspect, this application provides a computer-readable storage medium, including computer program instructions, where when the computer program instructions are executed by a computing device, the computing device performs the method described in any one of the first aspect or the possible implementations of the first aspect; or when the computer program instructions are executed by a computing device cluster, the computing device cluster performs the method described in any one of the first aspect or the possible implementations of the first aspect. For example, the computing device cluster may include one or more computing devices.

According to a sixth aspect, this application provides a computer program product including instructions, where when the instructions are run by a computing device, the computing device is enabled to perform the method described in any one of the first aspect or the possible implementations of the first aspect; or when the instructions are run by a computing device cluster, the computing device cluster is enabled to perform the method described in any one of the first aspect or the possible implementations of the first aspect. For example, the computing device cluster may include one or more computing devices.

It may be understood that, for beneficial effect of the second aspect to the sixth aspect, refer to related descriptions in the first aspect. Details are not described herein again.

**BRIEF DESCRIPTION OF DRAWINGS**

FIG. 1 is a diagram of an architecture of a content generation system according to an embodiment of this application;
FIG. 2 is a schematic flowchart of a content generation method according to an embodiment of this application;
FIG. 3 is a diagram of a process of correcting a denoising result according to an embodiment of this application;
FIG. 4 is a diagram of a structure of a content generation apparatus according to an embodiment of this application;
FIG. 5 is a diagram of a structure of a computing device according to an embodiment of this application;
FIG. 6 is a diagram of a structure of a computing device cluster according to an embodiment of this application; and
FIG. 7 is a diagram of a structure of another computing device cluster according to an embodiment of this application.

**DESCRIPTION OF EMBODIMENTS**

The term "and/or" in this specification describes an association relationship between associated objects and represents that three relationships may exist. For example, A and/or B may represent the following three cases: Only A exists, both A and B exist, and only B exists. The character "/" in this specification represents an "or" relationship between the associated objects. For example, A/B represents A or B.

In the specification and claims in this specification, the terms "first", "second", and the like are intended to distinguish between different objects, but do not indicate a particular order of the objects. For example, a first response message, a second response message, and the like are used to distinguish between different response messages, but do not indicate a particular order of the response messages.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

In the descriptions of embodiments of this application, unless otherwise specified, "a plurality of" means two or more. For example, a plurality of processing units are two or more processing units, and a plurality of elements are two or more elements.

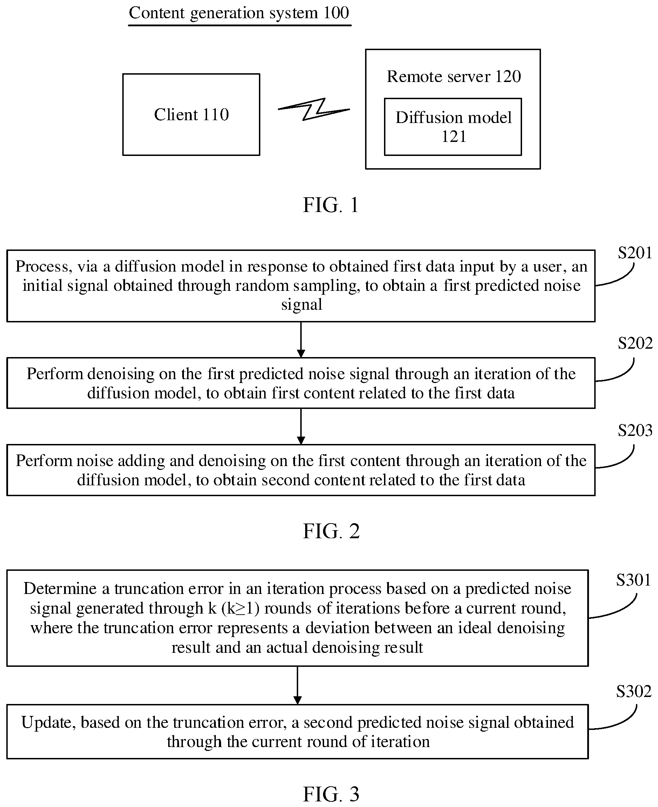

For example, FIG. 1 is a diagram of an architecture of a content generation system according to an embodiment of this application. As shown in FIG. 1, the content generation system 100 may include a client 110 and a remote server 120. The client 110 and the remote server 120 may communicate with each other through, but is not limited to, a network.

The client 110 is mainly responsible for receiving data (for example, text, voice, and an image) input by a user, transmitting the data to the remote server 220, and receiving content that is generated by the remote server 220 and that is related to the data input by the user, for example, an image, a video, and an audio. The client 110 may be a desktop application, a mobile application, a web application, a web-based application, or the like. In this embodiment, the user may input data such as text on the client 110. After the user completes inputting and triggers content generation on the client 110, the client 110 may send the data input by the user to the remote server 120. For example, after completing inputting, the user may tap, on the client 110, a button for executing a content generation task. For example, when the client 110 is the web application, the user may tap an "enter" button on a keyboard, to trigger the content generation task.

The remote server 120 is mainly responsible for receiving the data from the client 10, generating, based on the received data, the content related to the data, and sending the content to the client 110. For example, a diffusion model 121 may be configured on the remote server 120. The remote server 120 may generate, via the diffusion model 121 configured on the remote server, the content related to the data input by the user. In addition, the remote server 110 is usually deployed on a server, and has specific computing and storage resources. For example, the server on which the remote server 120 is deployed may be but is not limited to a cloud server, a physical server, or a virtual private server.

The foregoing describes the content generation system 100 provided in embodiments of this application. The following describes, based on the foregoing content, a content generation method provided in embodiments of this application.

For example, FIG. 2 is a schematic flowchart of a content generation method according to an embodiment of this application. It may be understood that the method may be performed by any apparatus, device, platform, or device cluster that has computing and processing capabilities. As shown in FIG. 2, the content generation method may include the following steps.

S201: Process, via a diffusion model in response to obtained first data input by a user, an initial signal obtained through random sampling, to obtain a first predicted noise signal.

In this embodiment, after the first data input by the user is obtained, random sampling may be first performed via the diffusion model, to obtain the initial signal. For example, the first data may be text, an image, or an audio. Then, the initial signal obtained through sampling is processed via the diffusion model, to obtain the first predicted noise signal.

S202: Perform denoising on the first predicted noise signal through an iteration of the diffusion model, to obtain first content related to the first data.

In this embodiment, after the first predicted noise signal is obtained, the first predicted noise signal may be denoised through the iteration of the diffusion model, to obtain the first content related to the first data, for example, an image, an audio, or a video. For example, in an iteration process of the diffusion model, degrees of denoising in all rounds of iterations may be different. For example, a denoising result of a $(t+1)^{th}$ round may be:

$$x_{t+1} = \frac{1}{\sqrt{\alpha_t}} x_t + \left( \sqrt{1 - \overline{\alpha_{t+1}}} \right) - \frac{\sqrt{1-\overline{\alpha_t}}}{\sqrt{\alpha_t}} \epsilon_\theta(x_t, t) \text{ (Formula 1)}$$

Herein, $x_{t+1}$ is the denoising result of the $(t+1)^{th}$ round, $x_t$ is a denoising result of a $t^{th}$ round, $\alpha$ and $\overline{\alpha}$ are both hyperparameters, and $\varepsilon_\theta(x_t, t)$ is estimated noise of the $t^{th}$ round.

In some embodiments, a result obtained through a current round of iteration may be further updated based on results obtained through previous rounds of iterations, to improve accuracy of the denoising result. Specifically, as shown in FIG. 3, the following steps may be included.

S301: Determine a truncation error in the iteration process based on a predicted noise signal generated through k (k≥1) rounds of iterations before the current round. The truncation error represents a deviation between an ideal denoising result and an actual denoising result.

In this embodiment, a value of k may be preset, or may be randomly generated. During the current round of iteration, the truncation error in the iteration process may be determined based on the predicted noise signal (that is, a part or all of a historical predicted noise signal) generated through the k rounds of iterations before the current round. For example, the truncation error of the $(t+1)^{th}$ round may be determined according to the following formula:

$$H_k = \sum_{i=1}^{k} r(t, i)(x_{t-i} - \sqrt{\overline{\alpha_t}} x_t + (\sqrt{1 - \overline{\alpha_{t-i}}} - \sqrt{\alpha_{t-i} - \overline{\alpha_{t-i}}} \epsilon_\theta(x_t, t))) \text{ (Formula 2)}$$

Herein, $r(t, i)$ is a correction coefficient, $x_{t-i}$ is a result generated through a $(t-i)^{th}$ round of iteration, $\alpha$ and $\overline{\alpha}$ are both the hyperparameters, and $\varepsilon_\theta(x_t, t)$ is the estimated noise of the $t^{th}$ round. For example, $r(t, 1)$ to $r(t, k)$ may be a geometric progression.

S302: Update, based on the truncation error, a second predicted noise signal obtained through the current round of iteration.

In this embodiment, after the truncation error is obtained, the second predicted noise signal obtained through the current round of iteration may be updated based on the truncation error. It can be learned from Formula 1 and Formula 2 that a predicted noise signal generated in the $(t+1)^{th}$ round is:

$$x_{t+1}^* = \frac{1}{\sqrt{\alpha_t}}x_t^* + \left(\sqrt{1-\overline{\alpha_{t+1}}}\right) - \frac{\sqrt{1-\overline{\alpha_t}}}{\sqrt{\alpha_t}})\epsilon_\theta(x_t^*, t) + \sum_{i=1}^{k} r(t,i)(x_{t-1}^* - \sqrt{\overline{\alpha_t}}\,x_t^* + (\sqrt{1-\overline{\alpha_{t-i}}} -$$

$$\sqrt{\alpha_{t-i} - \overline{\alpha_{t-i}}}\epsilon_\theta(x_t^*, t))) \text{ (Formula 3)}$$

After the first content is obtained through the iteration, S203 may be performed.

S203: Perform noise adding and denoising on the first content through an iteration of the diffusion model, to obtain second content related to the first data.

In this embodiment, after the first content is obtained, noise adding and denoising may be performed on the first content through the iteration of the diffusion model, to obtain the second content related to the first data. In a process of the current round of iteration, noise may be obtained through random sampling, the noise is added to content to be processed, and then, denoising is performed again. In this way, a result obtained in a first iteration process is re-degraded through random resampling, and denoising is performed again, so that local details can be enhanced, to restore more detail information, so as to optimize quality of finally generated content.

In this way, in a two-stage content generation manner, a content structure (for example, an image structure) can be quickly constructed in a first stage by using a smaller quantity of inference times, and content details can be enhanced in a second stage. Therefore, high-quality content can be generated more efficiently, and the structure and the details are rich and real. Because local details can be enhanced in the second stage, only the content structure needs to be constructed in the first stage, and the local details do not need to be constructed. Therefore, a quantity of iterations in the first stage can be reduced, and a reduced quantity of iterations may be less than a quantity of iterations in the second stage, so that a total quantity of iterations is reduced. In this way, content generation efficiency can be improved while quality of generated content is ensured. In addition, the quality of the generated content can be improved while the total quantity of iterations remains unchanged.

In some embodiments, S202 may be understood as a process of restoring low-frequency information. In this case, the generated first content is an overall structure and a primary texture of the finally obtained content. S203 may be understood as a process of restoring highfrequency information. In this case, a local texture, a contrast, and the like of the content generated in S202 are adjusted, to enhance local details of the content, so as to optimize quality of the content.

For example, when content required by the user is a face image, the first content obtained in S202 may be shapes of a face and facial features, and a skin texture of the face, and the second content obtained in S203 may be a result obtained by adjusting the local texture and the contrast of the first content.

When content required by a user is an audio, the first content obtained in S202 may be a segment of tone melody, and the second content obtained in S203 may be some drumbeats, lyrics, and the like.

In some embodiments, in S302, over-correction may be performed on the truncation error. For example, original correction coefficients are a geometric progression, and different correction coefficients may be multiplied by different values. In this way, the result generated through the iteration in the first stage can be prevented from being oversmoothed through over-correction, and a local primary texture can be retained, so that more adjustment space is available in the second stage, the second stage can play a greater role, and content generation quality can be further improved. In this case, in the second stage, a noise adding coefficient may be greater than a denoising coefficient, and the two coefficients may be hyperparameters. In this way, in the second stage, an amount of added noise is greater than an amount of removed noise. It should be understood that because the result has converged to a location near a target location (that is, an optimal denoising result) in the first stage, more noise may be added in the second stage, so that the result generated in the first stage oscillates near the target location. In an oscillation process, a distance from a noise point (namely, the noise point) to the target location is generally less than a distance between two noise points. Therefore, a small coefficient is used during denoising, to remove a small amount of noise.

In some embodiments, the quantity of iterations in the second stage (that is, S203) may be a hyperparameter, and may be 2 or 3; and the quantity of iterations in the first stage (that is, S202) may also be a hyperparameter, and may be 7, 8, or the like. For example, because the result has converged from a random location to the location near the target location in the first stage, the quantity of iterations in the second stage may be less than the quantity of iterations in the first stage, to facilitate quick fine-tuning in the second stage. In this way, an inference speed can be increased and resource overheads can be reduced while the quality of the generated content is ensured.

In some embodiments, the diffusion model may have a preset inference sequence, and needs to remove noise of different degrees in different inference steps. For example, when the inference sequence is from 1 to 1000, denoising needs to start from 1000. In this case, a degree of denoising may be the highest, and is reduced sequentially. For example, a number in the inference sequence may be understood as a quantity of inference times. Further, to increase an inference speed of the diffusion model, before the first stage (that is, S202), a subsequence of a first length may be selected from the inference sequence of the diffusion model. The subsequence may represent a quantity of times for denoising (that is, the quantity of iterations) in the first stage and a degree of denoising each time. For example, the subsequence may be obtained through uniform sampling from the inference sequence. For example, when the inference sequence is from 1 to 1000, if the first length is 10, the subsequence may be 1000, 900, 800, 700, 600, 500, 400, 300, 200, and 100.

It may be understood that the content generation method shown in FIG. 2 may be performed by a device side (for example, an electronic device such as a computer), or may be performed by a cloud side (for example, a server or a cloud server). When the method is performed by the device side, the device side may present the second content to the user after obtaining the second content. When the method is performed by the cloud side, the device side may obtain the first data input by the user, and then transmit the first data to the cloud side. In this way, the cloud side may obtain the first data from the device side, and process the first data. The cloud side may transmit the second content to the device side after obtaining the second content, to present the second content to the user on the device side.

It may be understood that sequence numbers of the steps in the foregoing embodiment do not mean execution sequences. The execution sequences of the processes should be determined based on functions and internal logic of the processes, and should not be construed as any limitation on implementation processes of embodiments of this application.

The foregoing describes the content generation method provided in embodiments of this application. The following describes, according to the method in the foregoing embodiment, a content generation apparatus provided in embodiments of this application.

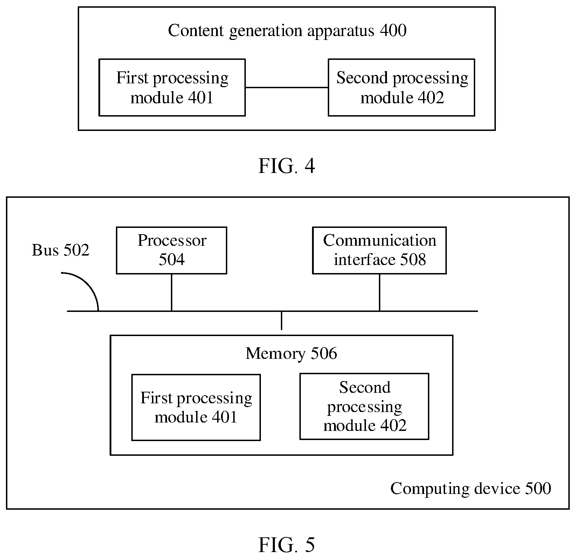

For example, FIG. 4 is a diagram of a structure of a content generation apparatus according to an embodiment of this application. As shown in FIG. 4, a first processing module 401 and a second processing module 402 are included. The first processing module 401 is configured to process, via a diffusion model in response to obtained first data input by a user, an initial signal obtained through random sampling, to obtain a first predicted noise signal. The second processing module 402 is configured to: perform denoising on the first predicted noise signal through an iteration of the diffusion model, to obtain first content related to the first data; and perform noise adding and denoising on the first content through an iteration of the diffusion model, to obtain second content related to the first data.

In some embodiments, when performing denoising on the first predicted noise signal through the iteration, the second processing module 402 is specifically configured to: determine, in a process of a current round of iteration, a truncation error in the iteration process based on a predicted noise signal generated through k (k≥1) rounds of iterations before the current round, where the truncation error represents a deviation between an ideal denoising result and an actual denoising result; and update, based on the truncation error, a second predicted noise signal obtained through the current round of iteration.

In some embodiments, before updating, based on the truncation error, the second predicted noise signal obtained through the current round of iteration, the second processing module 402 is further configured to perform over-correction on the truncation error.

In some embodiments, in a process of performing noise adding and denoising on the first content through the iteration, an amount of added noise is greater than an amount of removed noise.

In some embodiments, before performing denoising on the first predicted noise signal through the iteration of the diffusion model, the second processing module 402 is further configured to select a subsequence of a first length from an inference sequence of the diffusion model, where the subsequence represents a quantity of times for denoising the first predicted noise signal and a degree of denoising each time.

In some embodiments, a quantity of iterations for obtaining the first content is greater than a quantity of iterations for obtaining the second content.

In some embodiments, the content generation apparatus 400 is disposed on a server. In this case, the content generation apparatus 400 may further include a communication module (not shown in the figure). The communication module is configured to: before the first processing module processes, via the diffusion model, the initial signal obtained through random sampling, obtain the first data sent by an electronic device; and after the second processing module obtains the second content related to the first data, send the second content to the electronic device.

In some embodiments, both the first processing module 401 and the second processing module 402 shown in FIG. 4 may be implemented by software, or may be implemented by hardware. For example, the following describes an implementation of the first processing module 401 by using the first processing module 401 as an example. Similarly, for an implementation of the second processing module 402, refer to the implementation of the first processing module 401. For an implementation of the communication module that is not shown, also refer to the implementation of the first processing module 401.

A module is used as an example of a software functional unit, and the first processing module 401 may include code run on a computing instance. The computing instance may include at least one of a physical host (a computing device), a virtual machine, and a container. Further, there may be one or more computing instances. For example, the first processing module 401 may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for cross-region communication between two VPCs in a same region and between VPCs in different regions. The VPCs are interconnected through the communication gateway.

A module is used as an example of a hardware functional unit, and the first processing module 401 may include at least one computing device such as a server. Alternatively, the first processing module 401 may be a device implemented by an application-specific integrated circuit (application-specific integrated circuit, ASIC) or a programmable logic device (programmable logic device, PLD). The PLD may be a complex programmable logic device (complex programmable logical device, CPLD), a field-programmable gate array (field-programmable gate array, FPGA), a generic array logic (generic array logic, GAL), or any composition thereof.

A plurality of computing devices included in the first processing module 401 may be distributed in a same region, or may be distributed in different regions. The plurality of computing devices included in the first processing module 401 may be distributed in a same AZ, or may be distributed in different AZs. Similarly, the plurality of computing devices included in the first processing module 401 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the first processing module 401 may be configured to perform any step in the content generation method described in the foregoing embodiment, and the second processing module 402 may be configured to perform any step in the content generation method described in the foregoing embodiment. Steps implemented by the first processing module 401 and the second processing module 402 may be specified as required, and different steps in the content generation method described in the foregoing embodiment are respectively implemented by the first processing module 401 and the second processing module 402, to implement all functions of the content generation apparatus 400 shown in FIG. 4.

This application further provides a computing device 500. As shown in FIG. 5, the computing device 500 includes a bus 502, a processor 504, a memory 506, and a communication interface 508. The processor 504, the memory 506, and the communication interface 508 communicate with each other through the bus 502. The computing device 500 may be a server or a terminal device. It should be understood that quantities of processors and memories of the computing device 500 are not limited in this application.

The bus 502 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used for representation in FIG. 5, but this does not mean that there is only one bus or only one type of bus. The bus 504 may include a path for information transfer between various components (for example, the memory 506, the processor 504, and the communication interface 508) of the computing device 500.

The processor 504 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 506 may include a volatile memory (volatile memory), for example, a random access memory (random access memory, RAM). The processor 504 may further include a non-volatile memory (non-volatile memory), for example, a read-only memory (read-only memory, ROM), a flash memory, a hard disk drive (hard disk drive, HDD), or a solid state drive (solid state drive, SSD).

The memory 506 stores executable program code, and the processor 504 executes the executable program code to implement functions of the first processing module 401 and the second processing module 402 shown in FIG. 4, to implement the content generation method described in the foregoing embodiment. In other words, the memory 506 stores instructions used to perform the content generation method described in the foregoing embodiment.

Alternatively, the memory 506 stores executable code, and the processor 504 executes the executable code to implement functions of the content generation apparatus 400 shown in FIG. 4, to implement the content generation method described in the foregoing embodiment. In other words, the memory 506 stores instructions used to perform the content generation method described in the foregoing embodiment.

The communication interface 503 uses a transceiver module, for example, but not limited to, a network interface card or a transceiver, to implement communication between the computing device 500 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

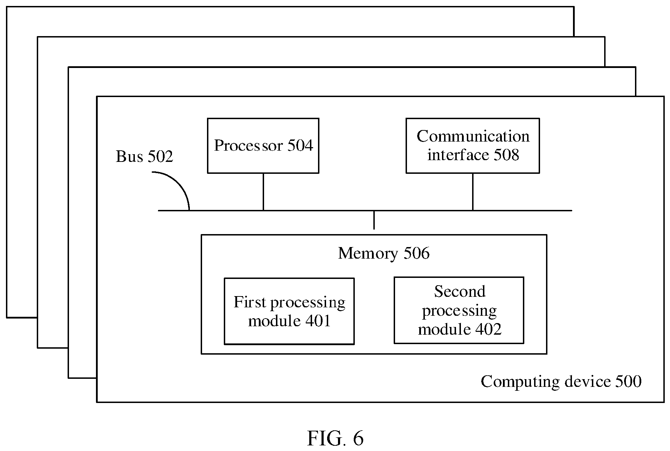

As shown in FIG. 6, the computing device cluster includes at least one computing device 500. Memories 506 of the one or more computing devices 500 in the computing device cluster may store same instructions used to perform the content generation method in the foregoing embodiment.

In some possible implementations, memories 506 of the one or more computing devices 500 in the computing device cluster may alternatively separately store some instructions used to perform the content generation method described in the foregoing embodiment. In other words, a combination of the one or more computing devices 500 may jointly execute the instructions used to perform the content generation method described in the foregoing embodiment.

It should be noted that memories 506 of different computing devices 500 in the computing device cluster may store different instructions that are separately used to perform some functions of the content generation apparatus 400 shown in FIG. 4. In other words, the instructions stored in the memories 506 of the different computing devices 500 may implement functions of one or both of the first processing module 401 and the second processing module 402.

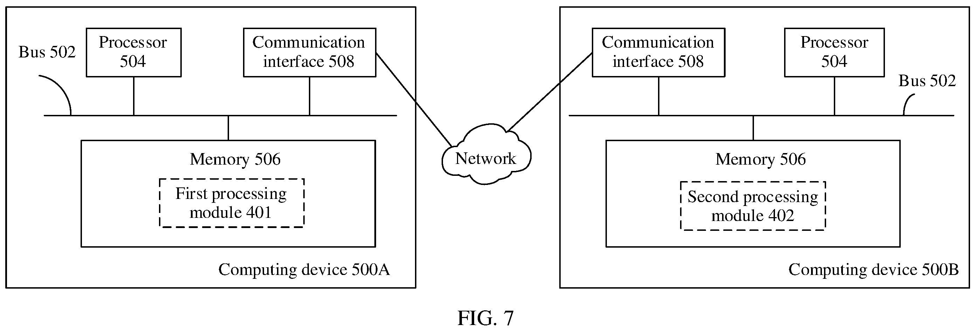

In some possible implementations, the one or more computing devices in the computing device cluster may be connected through a network. The network may be a wide area network, a local area network, or the like. FIG. 7 shows a possible implementation. As shown in FIG. 7, two computing devices 500A and 500B are connected through a network. Specifically, each computing device is connected to the network through a communication interface in the computing device. In this type of possible implementation, a memory 506 of the computing device 500A stores instructions for performing a function of the first processing module 501. In addition, a memory 506 of the computing device 500B stores instructions for performing a function of the second processing module 502.

It should be understood that functions of the computing device 500A shown in FIG. 7 may alternatively be completed by a plurality of computing devices 500. Similarly, functions of the computing device 500B may alternatively be completed by a plurality of computing devices 500.

An embodiment of this application further provides another computing device cluster. For a connection relationship between computing devices in the computing device cluster, similarly refer to the connection manners in the computing device cluster in FIG. 6 and FIG. 7. A difference lies in that memories 506 of one or more computing devices 500 in the computing device cluster may store same instructions used to perform the method in the foregoing embodiment.

In some possible implementations, memories 506 of one or more computing devices 500 in the computing device cluster may alternatively separately store some instructions used to perform the foregoing data processing method. In other words, a combination of the one or more computing devices 500 may jointly execute the instructions used to perform the foregoing data processing method.

According to the method in the foregoing embodiment, an embodiment of this application provides a content generation apparatus, including a processor and a memory. The memory is configured to store computer instructions. When the computer instructions are executed by the processor, the content generation apparatus 400 shown in FIG. 4 is enabled to perform the method in the foregoing embodiment. For example, the content generation apparatus may be but is not limited to a chip.

According to the method in the foregoing embodiment, an embodiment of this application provides a computer-readable storage medium, including computer program instructions. When the computer program instructions are executed by a computing device, the computing device performs the method in the foregoing embodiment; or when the computer program instructions are executed by a computing device cluster, the computing device cluster performs the method in the foregoing embodiment. For example, the computer-readable storage medium may be any usable medium that can be stored in the computing device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like.

According to the method in the foregoing embodiment, an embodiment of this application provides a computer program product including instructions. When the instructions are run by a computing device, the computing device is enabled to perform the method in the foregoing embodiment; or when the instructions are run by a computing device cluster, the computing device cluster is enabled to perform the method in the foregoing embodiment.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instruction may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in the ASIC.

All or some of the foregoing embodiments may be implemented by software, hardware, firmware, or any combination thereof. When the software is used to implement embodiments, all or some of the embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instruction may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state disk, SSD)), or the like.

It may be understood that various numbers in embodiments of this application are merely used for differentiation for ease of description, and are not used to limit the scope of embodiments of this application.

Finally, it should be noted that the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of this application.

**Claims**

1. A content generation method, comprising:

    processing, via a diffusion model in response to obtained first data input by a user, an initial signal obtained through random sampling, to obtain a first predicted noise signal;
    performing denoising on the first predicted noise signal through an iteration of the diffusion model, to obtain first content related to the first data; and
    performing noise adding and denoising on the first content through an iteration of the diffusion model, to obtain second content related to the first data.

2. The method according to claim 1, wherein performing denoising on the first predicted noise signal through the iteration comprises:

    determining, in a process of a current round of iteration, a truncation error in the iteration process based on a predicted noise signal generated through k ($k \geq 1$) rounds of iterations before the current round, wherein the truncation error represents a deviation between an ideal denoising result and an actual denoising result; and
    updating, based on the truncation error, a second predicted noise signal obtained through the current round of iteration.

3. The method according to claim 2, wherein before updating, based on the truncation error, the second predicted noise signal obtained through the current round of iteration, the method further comprises:
performing over-correction on the truncation error.

4. The method according to claim 3, wherein in a process of performing noise adding and denoising on the first content through the iteration, an amount of added noise is greater than an amount of removed noise.

5. The method according to any one of claims 1 to 4, wherein before performing denoising on the first predicted noise signal through the iteration of the diffusion model, the method further comprises:
selecting a subsequence of a first length from an inference sequence of the diffusion model, wherein the subsequence represents a quantity of times for denoising the first predicted noise signal and a degree of denoising each time.

6. The method according to any one of claims 1 to 5, wherein a quantity of iterations for obtaining the first content is greater than a quantity of iterations for obtaining the second content.

7. The method according to any one of claims 1 to 6, wherein the method is applied to a server; before processing, via the diffusion model, the initial signal obtained through random sampling, the method further comprises:

obtaining the first data sent by an electronic device; and
after obtaining the second content related to the first data, the method further comprises:

sending the second content to the electronic device.

8. A content generation apparatus, comprising:

a first processing module, configured to process, via a diffusion model in response to obtained first data input by a user, an initial signal obtained through random sampling, to obtain a first predicted noise signal; and
a second processing module, configured to perform denoising on the first predicted noise signal through an iteration of the diffusion model, to obtain first content related to the first data, wherein
the second processing module is further configured to perform noise adding and denoising on the first content through an iteration of the diffusion model, to obtain second content related to the first data.

9. The apparatus according to claim 8, wherein when performing denoising on the first predicted noise signal through the iteration, the second processing module is specifically configured to:

determine, in a process of a current round of iteration, a truncation error in the iteration process based on a predicted noise signal generated through k ($k \geq 1$) rounds of iterations before the current round, wherein the truncation error represents a deviation between an ideal denoising result and an actual denoising result; and
update, based on the truncation error, a second predicted noise signal obtained through the current round of iteration.

10. The apparatus according to claim 9, wherein before updating, based on the truncation error, the second predicted noise signal obtained through the current round of iteration, the second processing module is further configured to:
perform over-correction on the truncation error.

11. The apparatus according to claim 10, wherein in a process of performing noise adding and denoising on the first content through the iteration, an amount of added noise is greater than an amount of removed noise.

12. The apparatus according to any one of claims 8 to 11, wherein before performing denoising on the first predicted noise signal through the iteration of the diffusion model, the second processing module is further configured to:
select a subsequence of a first length from an inference sequence of the diffusion model, wherein the subsequence represents a quantity of times for denoising the first predicted noise signal and a degree of denoising each time.

13. The apparatus according to any one of claims 8 to 12, wherein a quantity of iterations for obtaining the first content is greater than a quantity of iterations for obtaining the second content.

14. The apparatus according to any one of claims 8 to 13, wherein the apparatus is disposed on a server; and the apparatus further comprises a communication module, wherein
the communication module is configured to: before the first processing module processes, via the diffusion model, the initial signal obtained through random sampling, obtain the first data sent by an electronic device; and after the second processing module obtains the second content related to the first data, send the second content to the electronic device.

15. A content generation apparatus, comprising a processor and a memory, wherein the memory is configured to store computer instructions, and when the computer instructions are executed by the processor, the content generation apparatus is enabled to perform the method according to any one of claims 1 to 7.

16. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 7.

17. A computer-readable storage medium, comprising computer program instructions, wherein when the instructions are run by a computing device cluster, the computing device cluster is enabled to perform the method according to any one of claims 1 to 7, wherein the computing device cluster comprises at least one computing device.

18. A computer program product comprising instructions, wherein when the instructions are run by a computing device cluster, the computing device cluster is enabled to perform the method according to any one of claims 1 to 7, wherein the computing device cluster comprises at least one computing device.

Content generation system 100

```
┌─────────────────────┐            ┌─────────────────────────────┐
│                     │            │   Remote server 120         │
│                     │            │  ┌───────────────────────┐  │
│    Client 110       │   ⚡        │  │  Diffusion model      │  │
│                     │            │  │      121              │  │
│                     │            │  └───────────────────────┘  │
└─────────────────────┘            └─────────────────────────────┘
```

FIG. 1

┌──────────────────────────────────────────────────────────────────┐
│ Process, via a diffusion model in response to obtained first data  │  S201
│ input by a user, an initial signal obtained through random         │
│ sampling, to obtain a first predicted noise signal                 │
└──────────────────────────────────────────────────────────────────┘
                              ↓
┌──────────────────────────────────────────────────────────────────┐
│ Perform denoising on the first predicted noise signal through an   │  S202
│ iteration of the diffusion model, to obtain first content related  │
│ to the first data                                                  │
└──────────────────────────────────────────────────────────────────┘
                              ↓
┌──────────────────────────────────────────────────────────────────┐
│ Perform noise adding and denoising on the first content through an │  S203
│ iteration of the diffusion model, to obtain second content related │
│ to the first data                                                  │
└──────────────────────────────────────────────────────────────────┘

FIG. 2

┌──────────────────────────────────────────────────────────────────┐
│ Determine a truncation error in an iteration process based on a    │  S301
│ predicted noise signal generated through k (k≥1) rounds of         │
│ iterations before a current round, where the truncation error      │
│ represents a deviation between an ideal denoising result and an     │
│ actual denoising result                                            │
└──────────────────────────────────────────────────────────────────┘
                              ↓
┌──────────────────────────────────────────────────────────────────┐
│ Update, based on the truncation error, a second predicted noise    │  S302
│ signal obtained through the current round of iteration             │
└──────────────────────────────────────────────────────────────────┘

FIG. 3

Content generation apparatus 400

First processing module 401 — Second processing module 402

FIG. 4

Bus 502

Processor 504

Communication interface 508

Memory 506

First processing module 401

Second processing module 402

Computing device 500

FIG. 5

Bus 502

Processor 504

Communication interface 508

Memory 506

First processing module 401

Second processing module 402

Computing device 500

FIG. 6

FIG. 7

## INTERNATIONAL SEARCH REPORT

| International application No. |
| --- |
| **PCT/CN2024/118314** |

### A. CLASSIFICATION OF SUBJECT MATTER

G06T5/70(2024.01)i

According to International Patent Classification (IPC) or to both national classification and IPC

### B. FIELDS SEARCHED

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNTXT, DWPI, ENTXTC, GOOGLE SCHOLAR, BING: 扩散模型, 去噪扩散概率模型, 迭代, 次数, 减少, 加, 加噪, 去噪, 噪, 噪声, 预测, 截断误差, DM, DDPM, diffusion, model, iteration, number, reduce, add, noise, denoise, predict, truncation, error.

### C. DOCUMENTS CONSIDERED TO BE RELEVANT

| Category* | Citation of document, with indication, where appropriate, of the relevant passages | Relevant to claim No. |
| --- | --- | --- |
| A | CN 116433501 A (ALIBABA (CHINA) CO., LTD.) 14 July 2023 (2023-07-14) description, paragraphs 0004-0032 | 1-18 |
| A | CN 116385328 A (BEIJING LONGZHI SHUKE TECHNOLOGY SERVICE CO., LTD.) 04 July 2023 (2023-07-04) entire document | 1-18 |
| A | CN 116664450 A (INFORMATION AND COMMUNICATION BRANCH, STATE GRID ZHEJIANG ELECTRIC POWER CO., LTD. et al.) 29 August 2023 (2023-08-29) entire document | 1-18 |
| A | CN 116665219 A (HUAWEI TECHNOLOGIES CO., LTD.) 29 August 2023 (2023-08-29) entire document | 1-18 |
| A | CN 116704269 A (TENCENT TECHNOLOGY (SHENZHEN) CO., LTD.) 05 September 2023 (2023-09-05) entire document | 1-18 |
| A | US 2023103638 A1 (GOOGLE LLC) 06 April 2023 (2023-04-06) entire document | 1-18 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 November 2024** | **26 November 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/118314**

| Patent document cited in search report | | | Publication date (day/month/year) | Patent family member(s) | | | Publication date (day/month/year) |
|---|---|---|---|---|---|---|---|
| CN | 116433501 | A | 14 July 2023 | CN | 116433501 | B | 09 January 2024 |
| CN | 116385328 | A | 04 July 2023 | | None | | |
| CN | 116664450 | A | 29 August 2023 | | None | | |
| CN | 116665219 | A | 29 August 2023 | | None | | |
| CN | 116704269 | A | 05 September 2023 | CN | 116704269 | B | 24 November 2023 |
| | | | | HK | 40093780 | A1 | 01 March 2024 |
| | | | | HK | 40093780 | A0 | 12 January 2024 |
| US | 2023103638 | A1 | 06 April 2023 | | None | | |

Form PCT/ISA/210 (patent family annex) (July 2022)

**EP 4 765 015 A1**

**Patent documents cited in the description**

- CN 202311192131X